# EUROPEAN PATENT SPECIFICATION

(11) **EP 2 545 783 B1**
(45) Date of publication and mention of the grant of the patent: **19.04.2017**
(21) Application number: 12004115.7
(22) Date of filing: 29.05.2012
(51) Int. Cl.: A23G 1/48, A23L 33/105, A23G 1/56

(54) **Chocolate based composition and method for suppressing appetite**
Zusammensetzung basierend auf Schokolade und Verfahren zur Unterdrückung des Appetits
Composition à base de chocolat et procédé pour supprimer l'appétit

(30) Priority: 29.05.2011 US 201161491196 P
(43) Date of publication of application: 16.01.2013
(73) Proprietor: Shatkina, Rufina, Orem, UT 84058 (US); Shatkina, Shlima, Orem, UT 84058 (US)
(72) Inventor: Shatkina, Rufina, Orem, UT 84058 (US); Shatkina, Shlima, Orem, UT 84058 (US)
(74) Representative: Jirotkova, Ivana

(56) References cited:
- WO-A2-2006/063219
- US-A1- 2002 028 276
- US-A1- 2009 311 367
- US-A1- 2010 021 533
- ABDALLA: "Production and Quality Assessment of Instant Baobab", ADVANCE JOURNAL OF FOOD SCIENCE AND TECHNOLOGY, vol. 2, no. 2, 10 March 2010 (2010-03-10), pages 125-133, XP055058952, ISSN: 2042-4876
- AFOLABI O R ET AL: "The effects of baobab pulp powder on the micro flora involved in tempe fermentation", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 220, no. 2, 8 September 2004 (2004-09-08), pages 187-190, XP019328034, ISSN: 1438-2385, DOI: 10.1007/S00217-004-0998-Y
- LEAKEY R R B ET AL: "Domestication of Irvingia gabonensis: 4. Tree-to-tree variation in food-thickening properties and in fat and protein contents of dika nut", FOOD CHEMISTRY, ELSEVIER LTD, NL, vol. 90, no. 3, 2005, pages 365-378, XP027770218, ISSN: 0308-8146 [retrieved on 2005-05-01]
- THIERRY JOÃ L NANGUE ET AL: "Irvingia gabonensis fat: nutritional properties and effect of increasing amounts on the growth and lipid metabolism of young rats wistar sp", LIPIDS IN HEALTH AND DISEASE, BIOMED CENTRAL, LONDON, GB, vol. 10, no. 1, 4 March 2011 (2011-03-04), page 43, XP021098575, ISSN: 1476-511X, DOI: 10.1186/1476-511X-10-43

## Description

This invention relates to a composition and method for controlling weight by suppressing appetite, inducing a feeling of satiety, and suppressing cravings for sweets and other food products. In particular, the invention relates to the use of a composition comprising chocolate combined with selected medicinal plant extracts.

### BACKGROUND OF THE INVENTION

It has previously been known in the art that chocolate has many health benefits due to its chemical components, such as theobromine, tryptophane, phenethylamine, and flavonoids. The theobromine in chocolate provides a caffeine-like stimulant due to its inhibition of the enzyme that breaks down cyclic adenosine monophosphate (cAMP). Tryptophane has been shown to increase the brain's serotonin levels for a happy, feel-good result. Phenethylamine releases endorphins, causing feelings of passion and love. And the flavonoids in dark chocolate can increase blood flow, which could help reduce high blood pressure.

Previous studies have also shown that smelling and/or eating chocolate suppresses appetite. For example, it has been shown that eating 30 g of dark chocolate resulted in feelings of satiation after 5 minutes and resulted in increased levels of glucose and insulin (post ingesting) or increased levels of glucose and decreased levels of insulin (post smelling), while no change was detected in gastrointestinal hormones associated with appetite (i.e., CCK, ghrelin, and GLP-1).

Additionally, recent research has shown that suppressing food related thoughts can cause a subsequent increase in consumption relative to groups not suppressing, or thinking about food. In a study where subjects were asked to suppress thoughts about chocolate consumption versus controls, they subsequently consumed more chocolate than the control group.

Additionally, in a study of 15,023 adults showed that individuals who consumed chocolate had a 19% decreased risk of lower high-density lipoprotein cholesterol and 15% reduced risk of metabolic syndrome, while candy-sugar consumers had a 14% decreased risk of elevated diastolic blood pressure.

Unfortunately, chocolate contains abnormally high levels of fat and sugar, therefore the above stated health advantages of consuming chocolate may be outweighed by risk factors associated with being overweight and may not be advisable for individuals actively seeking to lose weight. For example, a serving size of DOVE dark chocolate (40 grams) contains 210 calories and 13 grams of fat, 8 of which are saturated.

Therefore, there is a need for an effective chocolate based appetite suppressant composition that significantly minimizes the adverse health effects of chocolate (i.e., the amount of grams of fat and sugar found in chocolate) especially for a subject whose primary objective is weight reduction. There is also a need within the weight loss and diet industry for a composition that both suppresses appetite while promoting a feeling of satiety and reducing cravings for sweets and other food products, while also possessing an appetizing appearance.

Finally, the present invention can also be used as a healthy snack to hold one over until their next meal such as between lunch and dinner. The present invention can replace the hot dog, or chips, other unhealthy snacks consumed between meals. The present invention is not just a diet product. The present invention can be consumed like a nutritional bar such as a CLIFF bar or a LUNA bar.

The present invention accomplishes these objectives by combining chocolate with medicinal herbs and plant extracts known for their enhanced appetite suppression and/or weight reduction qualities, while not adversely affecting the overall appeal of the chocolate. Specifically, the appearance, taste, texture, and scent of the chocolate are not adversely affected by additional ingredients within the composition that directly act to suppress appetite, induce feelings of satiety, suppress cravings for sweets and other food products, and thus promote weight reduction. The combination of the chocolate with the plant extracts minimizes the amount of chocolate a subject must consume before experiencing appetite suppression and other behaviors associated with weight control and reduction.

WO 2006/063219 discloses a chocolate formulation for delivering nutraceuticals such as plant extracts or concentrates, said formulation comprising, besides low caloric sweeteners, a specific chocolate base. This formulation is based on sweeteners and plant components and uses chocolate as a taste masking agent.

### SUMMARY OF THE INVENTION

The present invention comprises a composition and method of use of an oral formulation of chocolate in combination with medicinal herbs and plants extracts to promote weight loss by suppressing one's appetite, inducing feelings of satiety, and reducing cravings for sweets and other food products. In a preferred embodiment of the present invention the composition comprises chocolate and at least one of the ingredients selected from the group consisting of the powder or extract of *Achyranthes (e.g., Achyranthes Aspera), Irvingia gabonensis, or Adansonia digitata Lin (e.g. Baobab),* and combinations thereof.

Another aspect of the present invention is to provide a chocolate based composition with additional active ingredients that act to suppress appetite, induce feelings of satiety and reduce cravings for sweets and other food products, wherein the ingredients do not adversely affect the appearance, taste, texture, or scent of the chocolate based composition in the absence of the active ingredients. Of the active ingredients within the composition, the percentage of chocolate comprises from about 20-99%, while the appetite suppressing and/or weight reduction ingredients comprise from about .1-40%, and still more preferably from about 2-30% as show in Table 4, wherein percentages may represent for example percentage by weight or volume of the total composition of active and inactive ingredients. Additional weight reduction ingredient percentages are shown in Tables 5, 6, and 7.

Another aspect of the present invention is to provide a chocolate based composition comprising additional active ingredients that are derived from plant extracts or plant powders wherein the addition of the additional active ingredients to the composition reduces the total amount of chocolate, and thus saturated fat and sugar consumed, while optimizing the experience of appetite suppression, feelings of satiety, and reduction of cravings for sweets and other food products.

Another aspect of the present invention is to provide a composition for suppressing appetite that can be delivered in a variety of formulations selected from the group consisting of powder, granules, liquid, crème, solid, and combinations thereof. In a preferred embodiment of the present invention the composition is orally administered as needed to suppress one's appetite, induce feelings of satiety, and reduce cravings for sweets and other food products.

### DETAILED DESCRIPTION OF THE INVENTION

In the following description, numerous specific details are set forth to provide a thorough understanding of the invention. However, it is understood that the invention may be practiced without these specific details. In other instances, well-known structures and techniques known to one of ordinary skill in the art have not been shown in detail in order not to obscure the invention.

The present invention is directed to a composition for the suppression of appetite while promoting a feeling of satiety and reducing cravings for sweets and other food products wherein the main ingredient is chocolate combined with additional active ingredients known to suppress appetite and/or promote weight reduction. The addition of the active ingredients does not adversely affect the appeal of the composition to the subject. In a preferred embodiment of the present invention, the subject is human and the additional active ingredients are medicinal herbs or plant extracts that have been shown through rigorous scientific studies to effectively suppress appetite and/or promote weight loss in a human.

For the purpose of the present invention, the term "not adversely affected" is defined as not degrading or negatively altering the appeal of the composition to any senses of the subject consuming the composition. In particular, the addition to the chocolate based composition of the present invention with active ingredients that act directly and indirectly to suppress appetite and/or promote weight reduction in a subject, does not adversely affect the desirability of the composition as a whole. The subject is either unable to detect the presence of the additional non-chocolate active ingredients, or s/he does not consider them to reduce the appeal of the chocolate based composition in overall appearance, taste, texture, and scent.

The chocolate ingredient of the present invention is derived from theobroma cacao seed, and may be dark, milk, white, sugar free, organic, or any other type of chocolate or cacao product readily known in the art. Dark chocolate contains cocoa solids (bean powder or cacao), cocoa butter and sugar; milk chocolate additionally contains milk powder or condensed milk; and white chocolate contains sugar, cocoa butter and milk solids but no cocoa powder. The "cacao percentage" in bars of chocolate refers to the total amount of cocoa solids and cocoa butter contributed by ground-up cocoa beans. Sugar accounts for the remainder of the content, along with minute amounts (typically less than 2 wt.%) of emulsifiers, vanilla flavoring, salt and sometimes milk fat. Dark chocolate, whether labeled bittersweet, semisweet or dark, must contain at least 35% cocoa according to rules set by the US Food and Drug Administration. The compositions per unit dosage, whether liquid, solid, or any formulation combination thereof, may contain active ingredients from about 50% to 99% of chocolate and from about .1% to 40% of medicinal herbs or plant extracts that exhibit appetite suppression and/or weight reduction properties. As used herein, a "unit dosage" is preferably in the range of about 1 to 50 grams, and still more preferably is in the range of about 12 grams to 24 grams. And herein the term "about" is defined as +/- 5%; and the term "composition" is defined as either a food product or dietary supplement intended for human consumption.

The composition of the present invention comprises a combination of chocolate with known appetite suppressing compounds formulated and processed in a manner to not adversely affect the appearance, taste, texture and scent of the chocolate. Tables 1-3 illustrate study results showing that the compositions taught by the present invention have no or little effect on the taste, texture, and smell of the chocolate produces.

In Table 1, 90% of survey participants could not tell the difference between a composition product of the present invention and a pure chocolate product based on the taste of the chocolate product.

**TABLE 1**

| | How would you rate the taste of the chocolate? | | | | | |
|---|---|---|---|---|---|---|
| | Chocolate A | | | Chocolate B | | |
| Participants | A) Poor | B) Average | C) Good | A) Poor | B) Average | C) Good |
| 1 | | | X | | | X |
| 2 | | | X | | | X |
| 3 | | | | | X | |
| 4 | | | X | | | X |
| 5 | | | X | | | X |
| 6 | | | X | | | X |
| 7 | | X | | | X | |
| 8 | | | X | | | X |
| 9 | | X | | | | X |
| 10 | | | X | | | X |

In Table 2, 100% of survey participants could not tell the difference between a composition product of the present invention and a pure chocolate product based on the texture of the chocolate product.

**TABLE 2**

| | How would you rate the texture of the chocolate? | | | | | |
|---|---|---|---|---|---|---|
| | Chocolate A | | | Chocolate B | | |
| Participants | A) Poor | B) Average | C) Good | A) Poor | B) Average | C) Good |
| 1 | | | X | | | X |
| 2 | | | X | | | X |
| 3 | | | X | | | X |
| 4 | | | X | | | X |
| 5 | | | X | | | X |
| 6 | | | X | | | X |
| 7 | | X | | | X | |
| 8 | | | X | | | X |
| 9 | | | X | | | X |
| 10 | | | X | | | X |

In Table 3, 100% of survey participants could not tell the difference between a composition product of the present invention and a pure chocolate product based on the smell of the chocolate product.

**TABLE 3**

| | How would you rate the smell of the chocolate? | | | | | |
|---|---|---|---|---|---|---|
| | Chocolate A | | | Chocolate B | | |
| Participants | A) Poor | Average | C) Good | A) Poor | B) Average | C) Good |
| 1 | | | X | | | X |
| 2 | | | X | | | X |
| 3 | | | X | | | X |
| 4 | | | X | | | X |
| 5 | | | X | | | X |
| 6 | | | X | | | X |
| 7 | | | X | | | X |
| 8 | | | X | | | X |
| 9 | | | X | | | X |
| 10 | | | X | | | X |

Appetite suppressing and/or weight reduction compounds for use in the present invention may comprise medicinal herbs or plant extracts, individually added to chocolate or in various combinations and formulations with chocolate. Therefore, the composition may comprise the active ingredients of any type of chocolate combined with one or more plant extracts exhibiting appetite suppression, feelings of satiety, reduction in cravings and/or weight reduction properties that are known in the art.

In preferred embodiments of the present invention, chocolate is combined with the extract or powder derived from the fruit, leaves, bark, or seeds of at least one selected from the group consisting of *Achyranthes (e.g., Achyranthes Aspera), Irvingia gabonensis, or Adansonia digitata Lin(e.g. Baobab)* and combinations thereof. Methods of extracting substances from plants are well known in the art.

In a preferred embodiment of the present invention a species of the *Achyranthes* genus of plants may be one of the additional active ingredients added to the chocolate based composition. The *Achyranthes* genus of plants belongs to the *Amaranthaceae* family and includes a number of species. Some of these species include but are not limited to: *Achyranthes arborescens, Achyranthes aspera*, *Achryranthes atollensis, Achyranthes bidentata, Achyranthes canescens, Achyranthes faureri, Achyranthes indica, Achyranthes japonica, Achyranthes longifolia, Achyranthes margaretarum, Achyranthes mutica, Achyranthes splendens, Achyranthes talbotii.*

Table 4 lists three exemplary formulations of the composition of the present invention, with possible ranges of chocolate combined with one or more appetite suppressing and/or weight reduction plant extracts:

**TABLE 4**

| Ingredients | % Composition (wt. or vol.) |
|---|---|
| Chocolate (theobroma cacao seed) | 50-99 % |
| *Achyranthes Aspera* powder or extract | 2-30% |
| *Irvingia gabonensis* powder or extract | 2-30% |
| *Adansonia digitata* Lin powder or extract | 2-30% |

In particular, the composition of the present invention may further comprise, by way of exemplification, *Achyranthes Aspera* powder or extract added to a chocolate base. Preferably, the composition comprises from about .1% to about 40% by weight of volume of the composition; and in a particular exemplified embodiment of the present invention may comprise from about 2% to about 30% by weight or volume of, *Achyranthes Aspera* powder or extract. *Achyranthes Aspera* is a medicinal herb endogenous to India. The seeds of this plant have previously been known to possess oleic acid, which has been shown in various scientific studies of being able to induce a feeling of satiety following oral ingestion of the seeds or their by-product. Dietary Oleic acid can convert into a fat messenger called Oleoylethanolamide (OEA), which is a lipid synthesized in the intestine that reduces food intake. OEA also decreases meal frequency by engaging peroxisome proliferator-activated receptors-α (PPAR-α).

The composition of the present invention may alternatively comprise or further comprise *Irvingia gabonensis* powder or extract in combination with chocolate alone or in addition to other known medicinal herbs and plant extracts that exhibit appetite suppression and/or weight reduction properties. *Irvingia* is a genus of African and Southeast Asian trees in the family *Irvingiaceae,* sometimes known by the common names wild mango, African mango, or bush mango. Preferably, the composition comprises from about .1% to about 40% by weight of volume of the composition; and in a particular exemplified embodiment of the present invention may comprise from about 2% to about 30% by weight or volume, but may comprise anything within the range of about .1% to 40% of *Irvingia gabonensis* powder or extract. *Irvingia gabonensis* is found in West Africa on the wild or bush mango tree. These trees bear fruits which one can eat, but they are particularly known for their nuts that go by a variety of names including the following: ogbono, odika, etima, or dika nuts. These nuts are high in fat content (50 percent) and oil is also extracted from them. *Irvingia gabonensis* is 26.4% carbohydrates, 7.5%, protein and 14% fiber.

*Irvingia gabonensis* has previously been shown in scientific studies to enhance weight loss, lower cholesterol levels and improve the control of diabetes. For example, a double blind study was set up in 2005, in Cameroon, in Western Africa, to find out if *Irvingia gabonensis* could be a factor in weight loss. Forty obese subjects were chosen, ranging in ages from nineteen to fifty-two. They were divided into two groups - experimental and placebo. The experimental group took 1.05 grams of this extract three times daily for a total of 3.15 grams for thirty days. Both groups were told to follow a low fat diet and eat 1,800 calories a day for a period of thirty days. They were also instructed to keep a food journal for seven days. At the end of the trial period, the group that had taken the *Irvingia gabonensis* lost an average of 11.5 pounds whereas the placebo group only lost 2.9 pounds. The group that had received the extract showed their systolic blood pressure had decreased as well as their triglycerides, total cholesterol and LDL cholesterol while the HDL cholesterol increased.

The composition of the present invention may alternatively comprise or further comprise a member of the Bombacaceae family, such as a member of the *Adansonia L* genus, and in a preferred embodiment, the species *Adansonia digitata Lin.* (e.g. Baobab) powder or extract in combination with chocolate alone or in addition to other known medicinal herbs and plant extracts that exhibit appetite suppression and/or weight reduction properties. Preferably, the composition comprises from about .1 to about 40% by weight of volume of the composition; and in a particular exemplified embodiment of the present invention may comprise from about 2 to 30% by weight or volume of a member of the Bombacaceae family. *Adansonia digitata Lin* has previously been shown to be a strong antioxidant to be effective in treating infections, bronchial asthma, and allergic skin disorders. Additionally, in an in vitro study comparing nineteen medicinal plants, *Adansonia digitata Lin* proved the most effective against herpes simplex virus, Sindbis virus, and poliovirus.

The route of administration is oral via ingestible formulations well known in the art for human consumption, such as chewing or sucking and then swallowing. The composition may be formulated into tablets, granules, powders, solid, gels, crimes, liquids, and combinations thereof. By way of exemplification, the composition may comprise a solid chocolate candy with a crème filling comprising one or more plant extracts and medicinal herbs. In a preferred embodiment of the present invention, the composition comprises a solid formulation of a chocolate and plant extracts or powders that suppress appetite or elicit feelings of satiety or reduce cravings for sweets and other food products or promote weight loss overall.

The appropriate dose of the present invention is that sufficient to achieve appetite suppression of time ranging from about 1 to 4 hours. The term "dose" as used herein means physically discrete units suitable for oral consumption by a human subject, wherein each unit contains a predetermined quantity of the composition of the present invention to effectively suppress appetite while promoting a feeling of satiety and reducing cravings for sweets and other food products, and yet not adversely affecting the overall appeal and appearance of the chocolate. In a preferred embodiment of the present invention, the recommended dose is one chocolate piece taken orally as needed to suppress appetite, reduce cravings for sweets and other food products, and/or provide a sensation of satiety.

For example, a preferred daily dose may comprise a chocolate piece 30 minutes before lunch and another one 30 minutes before dinner wherein the unit dose weighs about 12 g and comprises 90% chocolate and 10% plant extracts of the present invention; and alternatively, 24 g comprising 90-95% chocolate and 5-10% plant extracts of the present invention.

Tables 5 and 6 list three exemplary formulations of the composition of the present invention, with possible ranges of chocolate combined with one or more appetite suppressing and/or weight reduction plant extracts:

**TABLE 5**

| **Formula 13%-20%** | Composition A | Composition B | Composition C | Composition D | Composition E | Composition F | Composition G |
|---|---|---|---|---|---|---|---|
| Chocolate (theobroma cacao seed) | 80%-87% | 80%-87% | 80%-87% | 80%-87% | 80%-87% | 80%-87% | 80%-87% |
| *Achyranthes Aspera* powder or extract | 20%-13% | 0 | 0 | 2% -11% | 2%-11% | 0 | 2%-11% |
| *Irvingia gabonensis* powder or extract | 0 | 20%-13% | 0 | 2%-11% | 2%-11% | 2% -11% | 0 |
| *Adansonia digitata Lin* powder or extract | 0 | 0 | 20%-13% | 2%-9% | 0 | 2%-9% | 2%-9% |
| | | | | | | | |

| **Formula 7%-13%** | Composition A | Composition B | Composition C | Composition D | Composition E | Composition F | Composition G |
|---|---|---|---|---|---|---|---|
| Chocolate (theobroma cacao seed) | 87%-93% | 87%-93% | 87%-93% | 87%-93% | 87%-93% | 87%-93% | 87%-93% |
| *Achyranthes Aspera* powder or extract | 13%-7% | 0 | 0 | 1%-11% | 1%-11% | 0 | 1%-11% |
| *Irvingia gabonensis* powder or extract | 0 | 13%-7% | 0 | 1%-8% | 1%-8% | 1%-8% | |
| *Adansonia digitata Lin* powder or extract | 0 | 0 | 13%-7% | 1%-8% | 0 | 1%-8% | 1%-8% |
| | | | | | | | |

| **Formula .1%-7%** | Composition A | Composition B | Composition C | Composition D | Composition E | Composition F | Composition G |
|---|---|---|---|---|---|---|---|
| Chocolate (theobroma cacao seed) | 93%-99.9% | 93%-99.9% | 93%-99.9% | 93%-99.9% | 93%-99.9% | 93%-99.9% | 93%-99.9% |
| *Achyranthes Aspera* powder or extract | 7%-.1% | 0 | 0 | .033% - 6.9% | .033% - 6.9% | 0 | .033% - 6.9% |
| *Irvingia gabonensis* powder or extract | 0 | 7%-.1% | 0 | .034% - 6.9% | .034% - 6.9% | .034% - 6.9% | 0 |
| *Adansonia digitata Lin* powder or extract | 0 | 0 | 7%-.1% | .033% - 3% | 0 | .033% - 3% | .033% - 3% |

Now referring to Table 5, formulations of the present invention in ranges of 13-20%, 7-13%, and .1-7% are illustrated. Composition A is the composition consisting of chocolate and *Achyranthes Aspera* only. Composition B is the composition consisting of Chocolate and *Irvingia gabonensis* only. Composition C is the composition consisting of Chocolate and *Adansonia digitate Lin* only. Composition D is the composition consisting of Chocolate and *Achyranthes Aspera, Irvingia gabonensis,* and *Adansonia digitata Lin.* Composition E is the composition consisting of Chocolate and two ingredients, *Achyranthes Aspera,* and *Irvingia gabonensis.* Composition F is the composition consisting of Chocolate and two ingredients, *Irvingia gabonensis,* and *Adansonia digitata Lin.* Composition G is the composition consisting of Chocolate and two ingredients, *Achyranthes Aspera,* and *Adansonia digitata Lin.* These seven compositions of the present invention consist of chocolate in combination with one or more of the three ingredients.

The formulation ranges of 13-20%, 7-13%, and .1-7% shown in Tables 6 and 7 illustrate how the percentages can be manipulated merely by changing the size of the chocolate.

**TABLE 6**

| | Composition A | Composition B | Composition C | Composition D |
|---|---|---|---|---|
| | | | | |
| Formula in percentege | Achyranthes Aspera | Irvingia Gabonensis | | Achyranthes Aspera + Irvingia Gabonensis + Adonsonia Digitata |
| .1% - 7% | .1% =< AA(x) <= 7% | .1% =< IG(Y) <= 7% | .1% =< AD(Z) <= 7% | .1% =< (AA(x)+IG(Y)+AD(Z)) <= 7% |
| 7% - 13% | 7% =< AA(x) <= 13% | 7% =< IG(Y) <= 13% | 7% =< AD(Z) <= 13% | 7% =< (AA(x)+IG(Y)+AD(Z)) <= 13% |
| 13% - 20% | 13% =< AA(x) <= 20% | 13% =< IG(Y) <= 20% | 13% =< AD(Z) <= 20% | 13% =< (AA(x)+IG(Y)+AD(Z)) <= 20% |

**TABLE 7**

| | Composition E | Composition F | Composition G |
|---|---|---|---|
| | | | |
| Formula in percentege | Achyranthes Aspera + Irvingia Gabonensis | Irvingia Gabonensis + Adonsonia Digitata | Achyranthes Aspera + Adonsonia Digitata |
| .1% - 7% | .1% =< (AA(x)+IG(Y)) <= 7% | .1% =< (IG(Y)+AD(Z)) <= 7% | .1% =< (AA(x)+AD(Z)) <= 7% |
| 7% - 13% | 7% =< (AA(x)+IG(Y)) <= 13% | 7% =< (IG(Y)+AD(Z)) <= 13% | 7% =< (AA(x)+AD(Z)) <= 13% |
| 13% - 20% | 13% =< (AA(x)+IG(Y)) <= 20% | 13% =< (IG(Y)+AD(Z)) <= 20% | 13% =< (AA(x)+AD(Z)) <= 20% |

Now referring to Table 6 and Table 7, AA = *Achyranthes Aspera*; IG = *Irvingia Gabonensis*; AD = *Adansonia Digitata*; X = Miligrams for *Achyranthes Aspera*; Y = Miligrams for *Irvingia Gabonensis*; and Z = Miligrams for *Adansonia Digitata.* As is readily shown by Tables 6 and 7, how easily the percentages of the composition can be manipulated by merely changing the size of the chocolate. Additionally, it is readily apparent to anyone skilled in the art that an effort can be made in an attempt try to circumvent the claims of the present invention by introducing other candy type ingredients such as peanuts, raisins, caramel, etc. to the composition in an effort to change the percentages of the composition, while creating an equivalent product. For example, a composition using as little as 20% of chocolate with a 10% formula, and a filler for the remaining percentage such as peanuts or raisins, would be equivalent.

While preferred embodiments of the present invention have been shown and described, it will be understood by those skilled in the art that various changes or modifications can be made without varying from the present invention. In particular, other flavors and additives commonly known by the skilled artisan and used in confectionary products may be added as desired to enhance taste as long as they do not substantially degrade the beneficial effects of the various claimed ingredients. It is also understood that the disclosed percentages of ingredients and chocolate within the composition indicate either weight or volume percentages.

## Claims

1. A chocolate based appetite suppressant composition, wherein
a chocolate ingredient is 20% to 99.9% by weight or volume;
wherein the chocolate ingredient is at least one ingredient selected from the group consisting of dark chocolate, milk chocolate, white chocolate and sugar free chocolate, and combinations thereof;
at least one plant extract or powder ingredient; and
wherein the plant extract or powder is derived from at least one selected from the group consisting of *Achyranthes, Irvingia gabonensis*, *Adansonia digitata Lin,* and combinations thereof.

2. The composition of claim 1, wherein the *Achyranthes* is *Achyranthes Aspera,* and comprises .1% to 20% by weight or volume of the composition.

3. The composition of claim 1, wherein the *Irvingia gabonensis* comprises .1% to 20% by weight or volume of the composition.

4. The composition of claim 1, wherein the *Adansonia digitata Lin* comprises. 1% to 20% by weight or volume of the composition.

5. A method of appetite suppression, inducing feelings of satiety, and suppressing cravings comprising the step of orally administering a composition that comprises
effective amounts of chocolate; and
at least one of an ingredient selected from the group consisting of *Achyranthes, Irvingia gabonensis, Adansonia digitata Lin*, and combinations thereof,
wherein the chocolate is 20% to 99.9% by weight or volume and at least one selected from the group consisting of dark chocolate, milk chocolate, white chocolate and sugar free chocolate, and combinations thereof.

6. The method of claim 5, wherein the *Achyranthes* is *Achyranthes Aspera,* and comprises .1% to 20% by weight or volume of the composition.

7. The method of claim 5, wherein the *Irvingia gabonensis* comprises .1% to 20% by weight or volume of the composition.

8. The method of claim 5, wherein the *Adansonia digitata Lin* comprises .1% to 20% by weight or volume of the composition.

9. The method of claim 5 for appetite suppression, inducing feelings of satiety, and suppressing cravings comprising the steps of:
administering orally a composition that comprises effective amounts of chocolate; and
including at least two ingredients selected from the group consisting of *Achyranthes, Irvingia gabonensis, Adansonia digitata Lin,* and combinations thereof,
wherein the chocolate is 93% to 99.9% by weight or volume and
at least one selected from the group consisting of dark, milk, white and sugar free, and combinations thereof.

10. The method of claim 9, wherein
the selected ingredients are *Achyranthes* and *Irvingia gabonensis;*
the *Achyranthes* is *Achyranthes Aspera*;
the *Achyranthes* comprises .033% to 6.9% by weight or volume of the composition; and
the *Irvingia gabonensis* comprises .033% to 6.9% by weight or volume of the composition.

11. The method of claim 9, wherein
the selected ingredients are *Achyranthes* and *Adansonia digitata Lin;*
the *Achyranthes* is *Achyranthes Aspera*;
the *Achyranthes* comprises .033% to 6.9% by weight or volume of the composition; and
the *Adansonia digitata Lin* comprises .033% to 3% by weight or volume of the composition.

12. The method of claim 9, wherein
the selected ingredients are *Adansonia digitata Lin* and *Irvingia gabonensis;*
the *Adansonia digitata Lin* comprises .033% to 3% by weight or volume of the composition; and
the *Irvingia gabonensis* comprises .034% to 6.9% by weight or volume of the composition.

13. The method of claim 9, wherein
the selected ingredients are *Achyranthes, Irvingia gabonensis,* and *Adansonia digitata Lin*;
the *Achyranthes* comprises .033% to 6.9% by weight or volume of the composition;
the *Achyranthes* is *Achyranthes Aspera*;
the *Irvingia gabonensis* comprises .034% to 6.9% by weight or volume of the composition; and
the *Adansonia digitata Lin* comprises .033% to 3% by weight or volume of the composition.

## Patentansprüche

1. Appetithemmende Zusammensetzung auf Basis von Schokolade, wobei
ein Schokoladenbestandteil 20 bis 99,9 Gew.-% oder
Vol.-% beträgt,
wobei der Schokoladenbestandteil wenigstens ein, aus der Gruppe bestehend aus dunkler Schokolade, Milchschokolade, weißer Schokolade, zuckerfreier Schokolade und Kombinationen davon ausgewählter Bestandteil ist,
wenigstens ein Pflanzenextrakt- oder Planzenpulverbestandteil enthalten ist, und
wobei der Pflanzenextrakt oder das Pflanzenpulver aus mindestens einer Pflanze gewonnen wurde, die aus der Gruppe bestehend aus *Achyranthes, Irvingia gabonensis, Adansonia digitata Lin* und Kombinationen davon ausgewählt wurde.

2. Zusammensetzung nach Anspruch 1, wobei *Achyranthes Achyranthes Aspera* ist und 0,1 bis 20 Gew.-% oder Vol.-% der Zusammensetzung umfasst.

3. Zusammensetzung nach Anspruch 1, wobei *Irvingia gabonensis* 0,1 bis 20 Gew.-% oder Vol.-% der Zusammensetzung umfasst.

4. Zusammensetzung nach Anspruch 1, wobei *Adansonia digitata Lin* 0,1% bis 20 Gew.-% oder Vol.-% der Zusammensetzung umfasst.

5. Verfahren zur Appetitzügelung, Herbeiführung des Sättigungsgefühls und Unterdrückung von Heißhunger, umfassend den Schritt der oralen Verabreichung einer Zusammensetzung, die
wirksame Mengen an Schokolade und
mindestens einen Bestandteil, der aus der Gruppe, welche
aus *Achyranthes, Irvingia gabonensis, Adansonia digitata*
*Lin* und Kombinationen davon besteht, ausgewählt wurde, umfasst,
wobei die Schokolade 20 bis 99,9 Gew.-% oder Vol.-% ausmacht und wenigstens eine, aus der Gruppe, welche aus dunkler Schokolade, Milchschokolade, weißer Schokolade und zuckerfreier Schokolade, und Kombinationen davon, besteht, ausgewählte Schokolade ist.

6. Verfahren nach Anspruch 5, wobei *Achyranthes Achyranthes Aspera* ist und 0,1 bis 20 Gew.-% oder Vol.-% der Zusammensetzung umfasst.

7. Verfahren nach Anspruch 5, wobei *Irvingia gabonensis* 0,1 bis 20 Gew.-% oder Vol.-% der Zusammensetzung umfasst.

8. Verfahren nach Anspruch 5, wobei *Adansonia digitata Lin* 0,1% bis 20 Gew.-% oder Vol.-% der Zusammensetzung umfasst.

9. Verfahren zur Appetitzügelung, Herbeiführung des Sättigungsgefühls und Unterdrückung von Heißhunger, nach Anspruch 5, umfassend die Schritte:
orales Verabreichen einer Zusammensetzung, die wirksame Mengen an Schokolade umfasst, und
Verwenden von mindestens zwei Bestandteilen, die aus der Gruppe bestehend aus *Achyranthes, Irvingia gabonensis, Adansonia digitata Lin* und Kombinationen davon ausgewählt wurden, in der Zusammensetzung,
wobei die Schokolade 93 bis 99,9 Gew.-% oder Vol.-% ausmacht und
mindestens eine, aus der Gruppe, welche aus dunkler, Milch-, weißer und zuckerfreier Schokolade, und Kombinationen davon, besteht, ausgewählte Schokolade ist.

10. Verfahren nach Anspruch 9, wobei
die ausgewählten Bestandteile *Achyranthes* und
*Irvingia gabonensis* sind,
*Achyranthes Achyranthes Aspera* ist,
*Achyranthes* 0,033 bis 6,9 Gew.-% oder Vol.-% der Zusammensetzung umfasst
und
*Irvingia gabonensis* 0,033 bis 6,9 Gew.-% oder Vol.-% der Zusammensetzung umfasst.

11. Verfahren nach Anspruch 9, wobei
die ausgewählten Bestandteile *Achyranthes* und *Adansonia digitata Lin* sind,
*Achyranthes Achyranthes Aspera* ist,
*Achyranthes* 0,033 bis 6,9 Gew.-% oder Vol.-% der Zusammensetzung umfasst
und
*Adansonia digitata Lin* 0,033 bis 3 Gew.-% oder Vol.-% der Zusammensetzung umfasst.

12. Verfahren nach Anspruch 9, wobei
die ausgewählten Bestandteile *Adansonia digitata Lin* und *Irvingia gabonensis* sind,
*Adansonia digitata Lin* 0,033 bis 3 Gew.-% oder Vol.-% der Zusammensetzung umfasst und
*Irvingia gabonensis* 0,034 bis 6,9 Gew.-% oder Vol.-% der Zusammensetzung umfasst.

13. Verfahren nach Anspruch 9, wobei
die ausgewählten Bestandteile *Achyranthes, Irvingia gabonensis* und *Adansonia digitata Lin* sind,
*Achyranthes* 0,033 bis 6,9 Gew.-% oder Vol.-% der Zusammensetzung umfasst,
*Achyranthes Achyranthes Aspera* ist,
*Irvingia gabonensis* 0,034 bis 6,9 Gew.-% oder Vol.-% der Zusammensetzung umfasst und
*Adansonia digitata Lin* 0,033 bis 3 Gew.-% oder Vol.-% der Zusammensetzung umfasst.

## Revendications

1. Composition à base de chocolat pour supprimer l'appétit, dans laquelle
- un composant formé de chocolat est présent à raison de 20% à 99,9% en poids ou en volume;
ledit composant formé de chocolat, étant au moins un composant choisi dans le groupe constitué par le chocolat noir, le chocolat au lait, le chocolat blanc, le chocolat sans sucre et des combinaisons de ceux-ci;
- au moins un composant consistant en une poudre ou un extrait de plante;
et dans laquelle la poudre ou l'extrait de plante dérive d'au moins un des composés choisis dans le groupe constitué par *Achyranthes, Irvingia gabonensis, Adansonia digitata Lin,* et des combinaisons de ceux-ci.

2. Composition selon la revendication 1, dans laquelle, par « *Achyranthes* », on entend *Achyranthes Aspera* et formant 0,1% à 20% en poids ou en volume de la composition.

3. Composition selon la revendication 1, dans laquelle *Irvingia gabonensis* forme 0,1% à 20% en poids ou en volume de la composition.

4. Composition selon la revendication 1, dans laquelle *Adansonia digitata Lin* forme 0,1% à 20% en poids ou en volume de la composition.

5. Procédé pour la suppression de l'appétit, induisant des sentiments de satiété et supprimant les besoins insatiables, comprenant une étape d'administration orale d'une composition comprenant
- des quantités efficaces de chocolat; et
- au moins un des composants choisis dans le groupe constitué par *Achyranthes, Irvingia gabonensis, Adansonia digitata Lin,* et des combinaisons de ceux-ci,
ledit chocolat formant de 20% à 99,9% en poids ou en volume et est au moins un composant choisi dans le groupe constitué par le chocolat noir, le chocolat au lait, le chocolat blanc, le chocolat sans sucre et des combinaisons de ceux-ci.

6. Procédé selon la revendication 5, dans laquelle, par « *Achyranthes* » on entend *Achyranthes Aspera* et formant 0,1% à 20% en poids ou en volume de la composition.

7. Procédé selon la revendication 5, dans laquelle *Irvingia gabonensis* forme 0,1% à 20% en poids ou en volume de la composition.

8. Procédé selon la revendication 5, dans laquelle *Adansonia digitata Lin* forme 0,1% à 20% en poids ou en volume de la composition.

9. Procédé selon la revendication 5 pour la suppression de l'appétit, induisant des sentiments de satiété, et supprimant les besoins insatiables, comprenant les étapes suivantes :
- l'administration orale d'une composition comprenant des quantités efficaces de chocolat;
- l'utilisation d'au moins deux composants choisis dans le groupe constitué par *Achyranthes, Irvingia gabonensis, Adansonia digitata Lin,* et des combinaisons de ceux-ci,
ledit chocolat formant de 93% à 99,9% en poids ou en volume et étant au moins en un composant choisi dans le groupe constitué par le chocolat noir, le chocolat au lait, le chocolat blanc, le chocolat sans sucre et des combinaisons de ceux-ci.

10. Procédé selon la revendication 9, dans lequel
- les composants choisis sont *Achyranthes* et *Irvingia gabonensis;*
- l'*Achyranthes* est l'*Achyranthes Aspera ;*
- l'*Achyranthes* forme 0.033% à 6.9% en poids ou en volume de la composition; et
- l'*Irvingia gabonensis* forme 0.033% à 6.9% en poids ou en volume de la composition.

11. Procédé selon la revendication 9, dans lequel
- les composants choisis sont *Achyranthes* et *Adansonia digitata Lin;*
- l'*Achyranthes* est l'*Achyranthes Aspera ;*
- l'*Achyranthes* forme 0.033% à 6.9% en poids ou en volume de la composition; et
- l'*Adansonia digitata Lin* forme 0.033% à 3% en poids ou en volume de la composition.

12. Procédé selon la revendication 9, dans lequel
- les composants choisis sont *Adansonia digitata Lin et Irvingia gabonensis;*
- l'*Adansonia digitata Lin* forme 0.033% à 3% en poids ou en volume de la composition; et
- l'*Irvingia gabonensis* forme 0.034% à 6.9% en poids ou en volume de la composition.

13. Procédé selon la revendication 9, dans lequel
- les composants choisis sont *Achyranthes, Irvingia gabonensis* et *Adansonia digitata Lin;*
- l'*Achyranthes* forme 0.033% à 6.9% en poids ou en volume de la composition;
- *Achyranthes* est l'*Achyranthes Aspera;*
- l'*Irvingia gabonensis* forme 0.034% à 6.9% en poids ou en volume de la composition; et
- l'*Adansonia digitata Lin* forme 0.033% à 3% en poids ou en volume de la composition.
